# EUROPEAN PATENT APPLICATION

(11) **EP 2 528 386 A1**
(43) Date of publication of application: **28.11.2012**
(21) Application number: 11734369.9
(22) Date of filing: 19.01.2011
(51) Int. Cl.: H04W 36/08, H04W 36/00

(54) **METHOD AND DEVICE FOR HANDOVER IN ACCESS POINT NETWORK**

(30) Priority: 21.01.2010 CN 201010001091
(71) Applicant: Huawei Technologies Co., Ltd., Shenzhen, Guangdong 518129 (CN)
(72) Inventor: ZHANG, Yong, Shenzhen Guangdong 518129 (CN); ZHU, Wei, Shenzhen Guangdong 518129 (CN); GAO, Longlong, Shenzhen Guangdong 518129 (CN); HONG, Jinsong, Shenzhen Guangdong 518129 (CN); JING, Kailong, Shenzhen Guangdong 518129 (CN)
(74) Representative: Kreuz, Georg Maria
(86) International application number: PCT/CN2011/070385
(87) International publication number: WO 2011/088787

(57) **Abstract**

Embodiments of the present invention provide a handover method and apparatus in an access point network. The method includes: determining, by a source access point, that a handover is needed; obtaining, by the source access point, IP address information of a target access point; setting up, by the source access point, an Iur link with the target access point according to the IP address information; instructing, by the source access point, the target access point to set up a radio link between the target access point and a user equipment; and deleting, by the source access point, a radio link between the source access point and the user equipment. In the embodiments of the present invention, the source access point obtains the IP address and a problem that the IP address is difficult to be configured manually in the access point network is solved. In addition, according to the embodiments of the present invention, during the handover procedure in the access point network, a soft handover manner that the radio link between the target access point and the user equipment is set up before the radio link between the source access point and the user equipment is deleted is adopted, thereby effectively solving a problem of a high call drop rate caused by a hard handover.

## Description

### ENTIRETIES.FIELD OF THE INVENTION

The present invention relates to the field of wireless communications, and in particular, to a handover method and apparatus in an access point network.

### BACKGROUND OF THE INVENTION

An access point (Access Point, AP) network in a wideband code division multiple access (Wideband Code Division Multiple Access, WCDMA) network is a solution generated to solve a problem of insufficient indoor coverage, where an AP is generally placed inside a building to enhance signal coverage inside the building. Generally, an AP network includes the following parts: a core network (Core Network, CN), an access gateway (Access Gateway, AG) and an AP. Multiple APs are connected to a core network of a certain operator through an access gateway. An operator generally has multiple access gateway apparatuses.

The multiple APs may be networked in the foregoing AP network to cover a relatively large area, and therefore, when a user equipment (User Equipment, UE) moves in the AP network, a handover between the APs might happen, that is, a handover of setup of a radio link (Radio Link, RL) with one AP to setup of an RL with another AP.

At present, in a WCDMA network, mainly a hard handover process is applicable to a handover in an AP network. However, in such a handover solution, a UE first needs to be disconnected from a currently linked source AP and is then connected to a target AP. When coverage of some APs is small, an area for handover is correspondingly small, thereby causing a call drop easily and bringing down user experience.

### SUMMARY OF THE INVENTION

Embodiments of the present invention provide a handover method and apparatus of an access point, which are to ensure continuity of a user conversation when a handover is performed in an AP network.

An embodiment of the present invention provides a handover method of an access point in an access point network. The method includes: determining, by a source access point, that a handover is needed; obtaining, by the source access point, IP address information of a target access point; setting up, by the source access point, an Iur link with the target access point according to the IP address information; instructing, by the source access point, the target access point to set up a radio link between the target access point and a user equipment; and deleting, by the source access point, a radio link between the source access point and the user equipment.

An embodiment of the present invention also provides a handover apparatus of an access point in an access point network, where the apparatus includes: a determining unit, configured to determine whether a handover is needed; an obtaining unit, configured to obtain IP address information of a target access point; a setup unit, configured to set up an Iur link with the target access point according to the IP address information; an instructing unit, configured to instruct the target access point to set up a radio link between the target access point and a user equipment; and a deleting unit, configured to delete a radio link between the source access point and the user equipment.

According to the embodiments of the present invention, the source access point obtains an IP address and a problem that the IP address is difficult to be configured manually in the access point network is solved. In addition, according to the embodiments of the present invention, during a handover procedure in the access point network, a soft handover manner, that the radio link between the target access point and the user equipment is set up before the radio link between the source access point and the user equipment is deleted, is adopted, which effectively solves a problem of a high call drop rate caused by a hard handover.

### BRIEF DESCRIPTION OF THE DRAWINGS

To more clearly illustrate the technical solutions according to the embodiments of the present invention or in the prior art, accompanying drawings needed for describing the embodiments or the prior art are introduced briefly in the following. Apparently, the accompanying drawings in the following descriptions merely show some embodiments of the present invention, and persons of ordinary skill in the art may obtain other drawings according to the accompanying drawings without making creative efforts.

FIG. 1 is a schematic flow chart of a handover method in an access point network according to an embodiment of the present invention;

FIG. 2 is a structural diagram of an access point network in the prior art;

FIG. 3 is a schematic flow chart of another handover method in an access point network according to an embodiment of the present invention;

FIG. 4 is a schematic diagram of a control plane protocol stack according to an embodiment of the present invention;

FIG. 5 is a schematic diagram of a user plane protocol stack according to an embodiment of the present invention;

FIG. 6 is a schematic diagram of data transmission between a user equipment and an access gateway when the user equipment moves between two access points according to an embodiment of the present invention;

FIG. 7 is a schematic flow chart of setting up a radio link between a target access point and a user equipment according to an embodiment of the present invention;

FIG. 8 is a schematic flow chart of deleting a radio link between a source access point and a user equipment according to an embodiment of the present invention;

FIG. 9 is a schematic flow chart of a relocation according to an embodiment of the present invention;

FIG. 10 is a schematic structural diagram of a handover apparatus in an access point network according to an embodiment of the present invention;

FIG. 11 is a schematic structural diagram of another handover apparatus in an access point network according to an embodiment of the present invention;

FIG. 12 is a schematic structural diagram of an obtaining unit according to an embodiment of the present invention; and

FIG. 13 is a schematic structural diagram of another obtaining unit according to an embodiment of the present invention.

### DETAILED DESCRIPTION OF THE EMBODIMENTS

The technical solutions according to the embodiments of the present invention are clearly and completely described in the following with reference to the accompanying drawings in the embodiments of the present invention. Obviously, the embodiments described are only part of rather than all of the embodiments of the present invention. All other embodiments obtained by persons of ordinary skill in the art based on the embodiments of the present invention without making creative efforts shall fall within the protection scope of the present invention.

Before a specific embodiment is introduced, an application scenario for the embodiments of the present invention is introduced briefly: The embodiments of the present invention are applied to an access point network. Applicable radio systems may include various systems such as wideband code division multiple access (Wideband Code Division Multiple Access, WCDMA), code division multiple access (Code Division Multiple Access, CDMA), and 3G long time evolution (LTE).

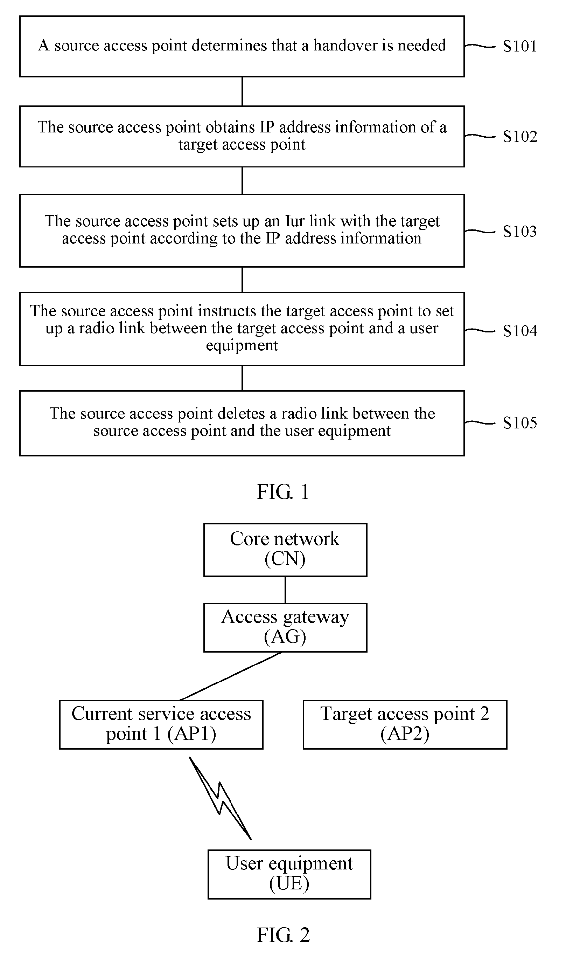

FIG. 1 is a schematic flow chart of a handover method in an access point network according to an embodiment of the present invention, and the embodiment of the present invention is described in the view of a source access point. The method includes the following steps:

S101: A source access point determines that a handover is needed. In the embodiment, the source access point determines whether the handover is needed. For example, the source access point may receive a radio resource control (Radio Resource Control, RRC) protocol measurement report (RRC Measurement Report) sent by a user equipment, and then determines whether the handover is needed according to quality of a radio link in the report. Certainly, the source access point in the embodiment of the present invention is not limited to the use of the foregoing RRC measurement report to determine whether to perform the handover, and determination of whether to perform the handover made according to other conditions shall also fall within the scope of the embodiments of the present invention.

S102: The source access point obtains IP address information of a target access point. According to the embodiment, the IP address information of the target access point may be obtained by the source access point, and manual configuration by an operator is not needed. The source access point may obtain the IP address information of the target access point through multiple manners, and specific obtaining manners are described in the following embodiments.

S103: The source access point sets up an Iur link with the target access point according to the IP address information.

It should be pointed out that the embodiment does not limit an execution sequence of steps S101 to S103, where step S101 may be executed after step S103. For example, when the source access point is powered on to start, IP address information of an adjacent target access point is obtained, and then an Iur link with the target access point is set up according to the IP address information. Subsequently, the source access point determines whether a handover is needed.

S104: The source access point instructs the target access point to set up a radio link between the target access point and a user equipment. Because the source access point determines the handover, that is, the source access point considers that the target access point has a relatively high signal quality, the source access point needs to instruct the target access point to set up the radio link between the target access point and the user equipment.

S105: The source access point deletes a radio link between the source access point and the user equipment. After the radio link between the target access point and the user equipment is set up according to step S104, the source access point may delete the radio link with the user equipment to complete the handover.

According to the embodiment of the present invention, in the access point network, the source access point determines whether to perform the handover, data obtained by the source access point during the handover is more comprehensive, and the handover procedure is more reliable. In the embodiment of the present invention, a manner in which the source access point obtains an IP address is adopted, and a problem that the IP address is difficult to be configured manually in the access point network is also solved. In addition, according to the embodiment of the present invention, during the handover procedure, a soft handover manner that the radio link between the target access point and the user equipment is set up before the radio link between the source access point and the user equipment is deleted is adopted, thereby effectively solving a problem of a high call drop rate caused by a hard handover.

FIG. 2 is a structural diagram of an access point network in the prior art. The access point network includes the following parts: a core network (Core Network, CN), an access gateway (Access Gateway, AG), a source access point 1 (AP1), a target access point 2 (AP2), and a user equipment (User Equipment, UE).

For example, the AP1 and the AP2 may belong to different cells. Currently, the UE is connected to the CN of an operator through the AP1 via the AG, and the UE is moving to a cell to which the AP2 belongs. Therefore, the AP2 is a target access point of the UE, that is, the UE may be handed over from the AP1 to the AP2.

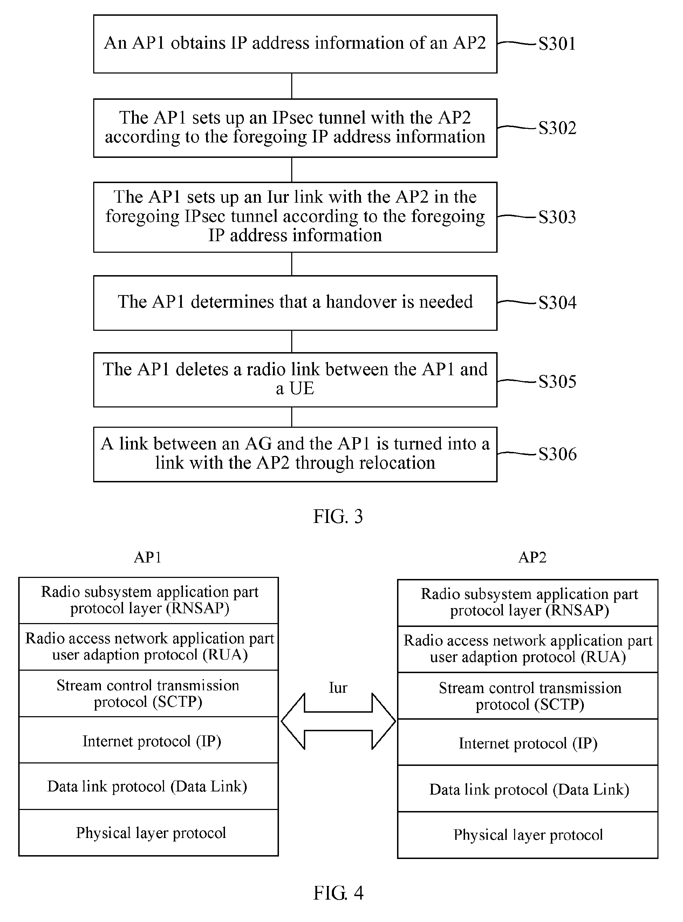

FIG. 3 is a schematic flow chart of another handover method in an access point network according to an embodiment of the present invention. The embodiment of the present invention further describes the present invention based on the structural diagram of the network in FIG. 2. The method may include the following steps:

S301: An AP1 obtains IP address information of an AP2. The obtaining of the IP address information is for setting up an Iur link with the AP2 during a subsequent handover to bear signaling data related to a UE and instruct the AP2 to set up a radio link between the AP2 and the UE.

In an existing macro network, an Iur link between radio network controllers (Radio Network Controller, RNC) is configured manually during a soft handover, where IP address information of an RNC needs to be learned in advance, and the number of RNCs should not be too large in case the configuration procedure is complicated. However, in an AP network, because the functions of the RNC are integrated in the AP, the number of APs is large, and an AP address may be obtained automatically after being powered on, a manner of manually configuring Iur is basically infeasible. Therefore, in the embodiment of the present invention, the AP1 adopts an automatic manner to obtain the IP address information of the target access point AP2.

As an embodiment of the present invention, the IP address information may be obtained in multiple manners and examples are as follows:

Manner 1: The AP1 sends to the AG a request message for obtaining the IP address information of the AP2, where the request message includes identity information of the AP2. It should be pointed out that the identity information may be reported to the AG by each AP in advance and stored in the AG, and the identity information may uniquely determine one AP. The AG forwards the request message to the AP2 according to the identity information of the AP2 in the request message. Upon receiving the request message, the AP2 feeds back its IP address to the AP1 through the AG.

In this manner, the AP1 may also carry its IP address information in the request message for obtaining the IP address information. In this way, the AP2 may obtain the IP address information of the AP1 without sending a request message. Certainly, when the AP2 needs to obtain the IP address information of the AP1, the request message for obtaining the IP address information may also be sent to the AG in a manner similar to the foregoing manner.

Manner 2: Each AP reports its IP address to the AG and the AG stores the IP address. In this way, when the AP1 or the AP2 needs to obtain the IP address information of each other, the IP address may be obtained from the AG directly, thereby reducing the time of obtaining the IP address information. In this manner, when reporting its IP address to the AG, each AP may also report its identity information to the AG at the same time.

Manner 3: The AP1 sends an IP address query message to the AP2 in a broadcasting packet manner. The IP address query message includes a source IP address of the AP1, and the identity information of the AP2, which needs to be queried. The identity information may be pre-configured in each AP by a configuration network element of an upper layer. Because APs which are capable of communicating and connect to the present AP can be known in advance, identity information of the APs which are capable of communicating may be pre-configured in the present AP.

After receiving the foregoing IP address query message sent by the AP1, the AP2 determines that the AP1 needs the IP address of the AP2, and sends a response message to the AP1 according to the source IP address of the AP1 in the message. The response message includes its own IP address information.

Manner 4: The AP2 receives the IP address information of the AP2 sent by the AP2 in the broadcasting packet manner. For example, after being powered on, the AP2 automatically sends its IP address and identity information in the broadcasting packet manner, and after receiving the foregoing IP address and identity information, the AP1 stores them, which are to be used when, subsequently, the AP2 needs to be instructed to set up the radio link with the UE.

S302: The AP1 sets up an IPsec tunnel with the AP2 according to the foregoing IP address information; and

S303: The AP1 sets up an Iur link with the AP2 in the foregoing IPsec tunnel according to the foregoing IP address information. In this embodiment, because the Iur link is set up in the IPsec tunnel, safety of data transmission in the Iur link may be ensured. In addition, in this embodiment, an Iur protocol stack in the Iur link includes a control plane protocol stack and a user plane protocol stack, which are introduced in the following, respectively:

FIG. 4 is a schematic diagram of a control plane protocol stack according to an embodiment of the present invention. As can be seen in the diagram, on a control plane, a set up Iur link protocol stack may include, from a top layer to a bottom layer, the following parts:
a radio subsystem application part (Radio Network Subsystem Application Part, RNSAP) protocol, where the protocol is mainly used for transmission of soft handover signaling;
a radio access network application part user adaption (RANAP User Adaption, RUA) protocol, which is mainly used for adaption of the RNSAP; and
a stream control transmission protocol (Stream Control Transmission Protocol, SCTP), which is a standard transmission layer protocol.

In addition, standard protocols are further included: an Internet protocol (Internet Protocol, IP), a data link (Data Link) protocol, and a physical layer protocol.

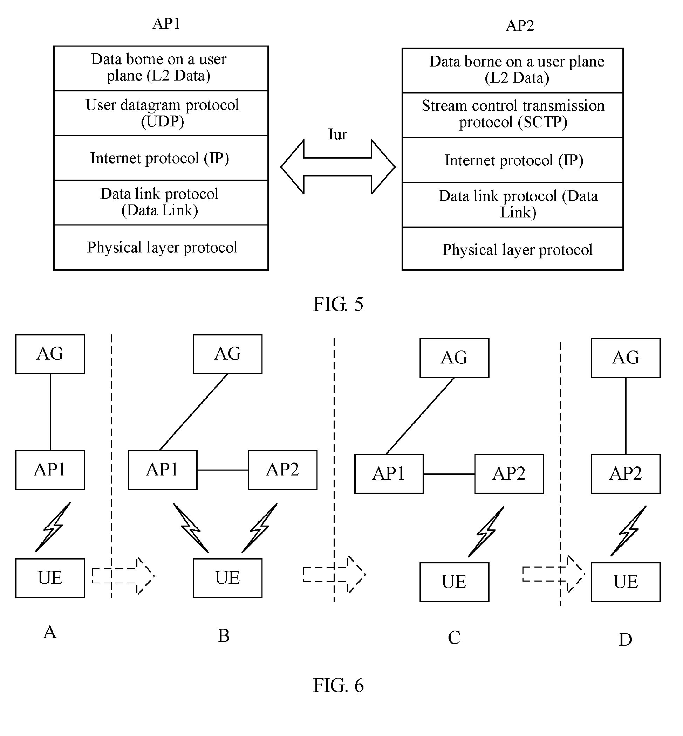

FIG. 5 is a schematic diagram of a user plane protocol stack according to an embodiment of the present invention. As can be seen in the diagram, the Iur link protocol stacks set up on a user plane by the AP1 and the AP2 are different, and the Iur link protocol stack in the AP1 may include, from the top layer to the bottom layer, the following parts:
data (L2 Data) borne on the user plane, a user datagram protocol (User Datagram Protocol, UDP), the Internet protocol, the data link protocol, and the physical layer protocol.

In the AP2, from the top layer to the bottom layer, the following parts may be included: the data borne on the user plane, the stream control transmission protocol, the Internet protocol, the data link protocol, and the physical layer protocol.

S304: The AP1 determines that a handover is needed. In the embodiment, the AP1 may determine that the handover needs to be performed according to a measurement report reported by the user equipment. For example, whether the handover needs to be performed is determined according to the quality of the radio link in an RRC Measurement Report.

S305: The AP1 instructs the AP2 to set up the radio link between the AP2 and the UE.

S306: The AP1 deletes a radio link between the AP1 and the UE.

Steps S305 to S306 are similar to the foregoing steps S104 to S105, which are not repeatedly described here.

S307: A link between the AG and the AP1 is turned into a link with the AP2 through relocation. Through the foregoing steps, the UE merely has the radio link with the AP2 and the radio link with the AP1 no longer exists. An Iur interface between the AP1 and the AP2 is still occupied. If the UE stays within coverage of the AP2, an Iur interface resource between the AP1 and the AP2 may be released and the link between the AG and the AP1 is turned into the link with the AP2 through relocation.

According to the embodiment of the present invention, in the access point network, the source access point determines whether to perform the handover, data obtained by the source access point during the handover is more comprehensive, and the handover process is more reliable. In the embodiment of the present invention, a manner in which the source access point obtains an IP address is adopted, and a problem that the IP address is difficult to be configured manually in the access point network is also solved. In addition, according to the embodiment, during the handover procedure, a soft handover manner that the radio link between the target access point and the user equipment is set up before the radio link between the source access point and the user equipment is deleted is adopted, thereby effectively solving a problem of a high call drop rate caused by a hard handover. Furthermore, in the embodiment of the present invention, the safety of the data transmission in the Iur link is ensured by setting up the Iur link in the IPsec tunnel.

FIG. 6 is a schematic diagram of data transmission between a user equipment and an access gateway when the user equipment moves between two access points according to an embodiment of the present invention. Through the diagram, it can be further understood that the embodiment according to FIG. 3 includes the following four states:
A. The UE is linked to the AG through a radio link with an AP1;
B. The UE moves from the AP1 to an AP2, and the UE may be linked to the AG through a radio link between the AP1 and the AP2;
C. The UE continues moving to the AP2, the radio link between the AP1 and the UE is deleted, and the UE is linked to the AG merely through a radio link with the AP2; and
D. An Iur interface resource between the AP1 and the AP2 is released and the link between the AG and the AP1 is turned into the link with the AP2 through relocation.

It can be seen that, the foregoing procedure includes a procedure of setting up a radio link (A to B), a procedure of deleting a radio link (B to C), and a relocation procedure (C to D), which are described in detail in the following, respectively.

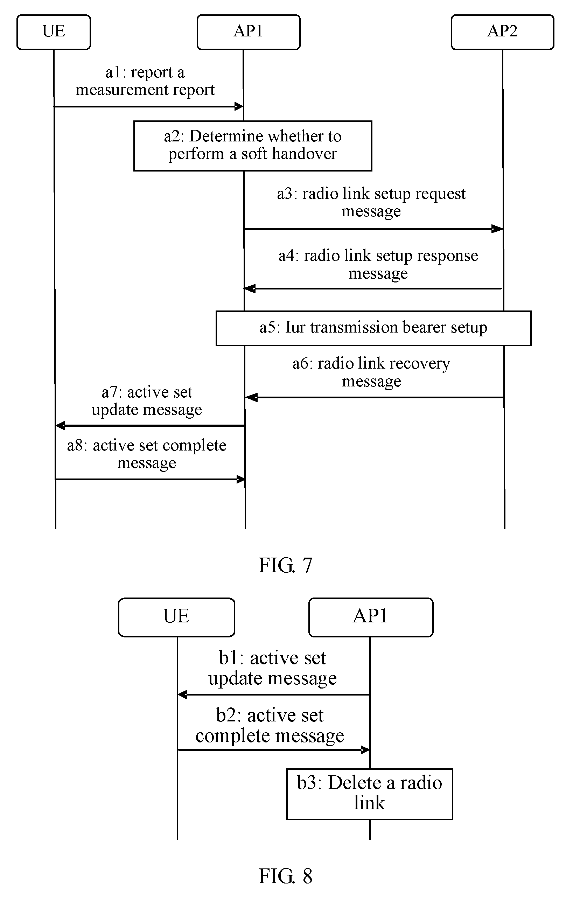

FIG. 7 is a schematic flow chart of setting up a radio link between a target access point and a user equipment according to an embodiment of the present invention, where the setting up includes the following steps:

Step a1: When a UE moves to a cell to which an AP2 belongs, an RRC Measurement Report is reported to an AP1.

Step a2: The AP1 determines whether a soft handover is needed according to the foregoing RRC Measurement Report, and in the embodiment, it is assumed that the AP1 determines that the soft handover is needed.

Step a3: The AP1 sends a radio link setup request message (Radio Link Setup Request) in an RNSAP to the AP2.

Step a4: After receiving the foregoing radio link setup request message, the AP2 returns a radio link setup response message (Radio Link Setup Response) to the AP1.

Step a5: After receiving the radio link setup response message, the AP1 initiates an Iur transmission bearer setup procedure, that is, sets up an Iur link between the AP1 and the AP2.

Step a6: The AP2 sends a radio link recovery message to the AP1 to enable the AP2 to send the related data to the UE.

Step a7: After receiving the radio link recovery message, the AP1 sends an active set update message (Active Set Update) to the UE, where the message includes information of a radio link that needs to be added.

Step a8: After receiving the foregoing update message, the UE adds a corresponding content in its active set according to the content of the message, that is, adds a radio link from the UE to the AP2 in this embodiment. After the link is added, the UE sends an active set update complete message (Active Set Update Complete) to the AP1.

FIG. 8 is a schematic flow chart of deleting a radio link between a source access point and a user equipment according to an embodiment of the present invention, where the deleting includes the following steps:

Step b1: An AP1 sends an active set update message to a UE, where the message includes information of a radio link that needs to be deleted.

Step b2: The UE deletes the radio link in an active set and sends an active set update complete message to the AP1.

Step b3: The radio link is deleted inside the AP1, for example, a service module inside the AP1 sends a radio link deletion request message to a radio link management module and receives a radio link deletion response message returned from the radio link management module, and then delete an Iur transmission bearer between the service module and the radio link management module.

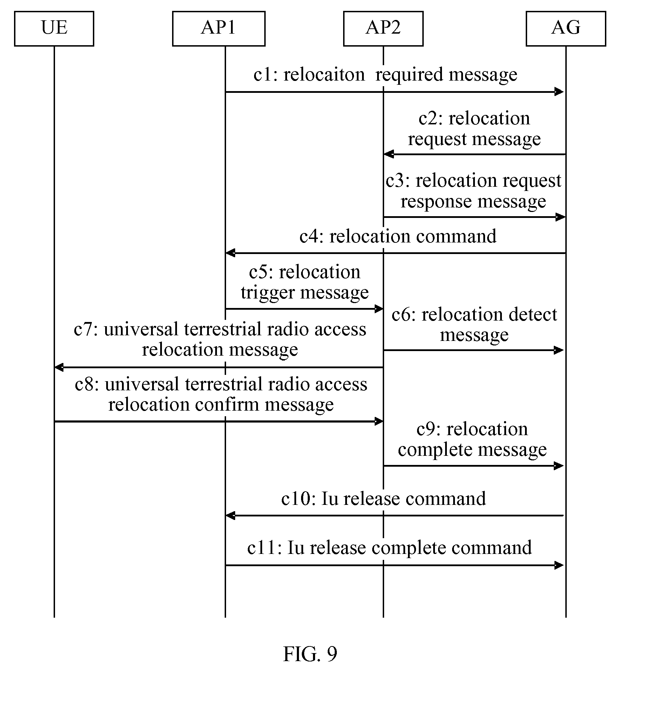

FIG. 9 is a schematic flow chart of a relocation according to an embodiment of the present invention, where the relocation includes the following steps:

Step c1: An AP1 sends a relocation required message (Handover Required) to an AG, where the message includes information of an AP2.

Step c2: After receiving the relocation required message, the AG sends a relocation request message (Handover Request) to the AP2 and requires the AP2 to prepare for the relocation.

Step c3: The AP2 sends a relocation request response message (Handover Request Ack) to the AG to instruct the AG that it is ready for the relocation.

Step c4: The AG sends a relocation command (Handover Command) to the AP1 to instruct it that the relocation may be performed.

Step c5: The AP1 sends a relocation trigger message (Relocation Commit) to the AP2 through an Iur link.

Step c6: The AP2 sends a relocation detect message (Handover Detect) to the AG to instruct it that the relocation trigger is detected.

Step c7: The AP2 sends a universal terrestrial radio access relocation message (Universal Terrestrial Radio Access, UTRAN Mobility) to the UE, where the message includes a new UTRAN radio network temporary identifier (UTRAN Radio Network Temporary Identifier, U-RNTI).

Step c8: The UE sends a universal terrestrial radio access relocation information confirm message (UTRAN Mobility Information) to the AP2.

Step c9: The AP2 sends a relocation complete message to the AG to instruct it that the relocation is completed.

Step c10: The AG sends an Iu release command (IU Release Command) to the AP1 to instruct the AP1 to release the Iu link.

Step c11: The AP1 sends an Iu release complete command (IU Release Complete) to the AG.

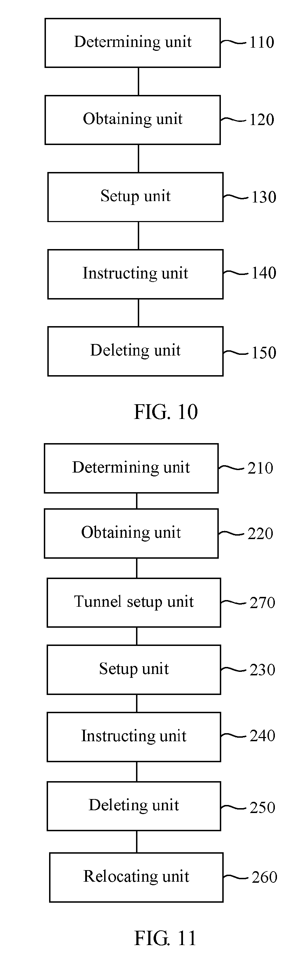

FIG. 10 is a schematic structural diagram of a handover apparatus in an access point network according to an embodiment of the present invention. The handover apparatus may be each access point apparatus in the access point network and may also be a function module in the access point apparatus, which is not limited in the embodiment of the present invention. It should be pointed out that, the embodiment of the present invention is described in the view of a source access point. The handover apparatus 100 includes: a determining unit 110, an obtaining unit 120, a setup unit 130, an instructing unit 140, and a deleting unit 150.

The determining unit 110 is configured to determine whether a handover is needed. For example, the determining unit 110 may receive an RRC Measurement Report and determines whether the handover is needed according to quality of a radio link in the report. Certainly, the determining unit 110 according to the embodiment of the present invention is not limited to the use of the foregoing RRC measurement report to determine whether to perform the handover. The determination of whether to perform the handover made according to other conditions shall also fall within the scope of the embodiment of the present invention.

The obtaining unit 120 is configured to obtain IP address information of a target access point. In the embodiment, the obtaining unit 120 may obtain the IP address information of the target access point in multiple manners and a detailed obtaining manner is described in the following embodiments.

The setup unit 130 is configured to set up an Iur link with the target access point according to the IP address information obtained by the obtaining unit 120.

As an embodiment of the present invention, the foregoing setup of the Iur link may be implemented when the handover apparatus is powered on, that is, when the handover apparatus is powered on, the obtaining unit 120 obtains the IP address information of an adjacent target access point, and then the setup unit 130 sets up the Iur link with the target access point according to the IP address information. In addition, the foregoing Iur link may be set up after the determining unit 110 determines that the handover is needed, which is not limited in the embodiment of the present invention.

The instructing unit 140 is configured to instruct the target access point to set up a radio link between the target access point and a user equipment. Because whether to perform the handover is determined by the determining unit 110 in the source access point, that is, the source access point considers that the target access point has a relatively high signal quality, the source access point needs to instruct, through the instructing unit 140, the target access point to set up the radio link between the target access point and the user equipment.

The deleting unit 150 is configured to delete a radio link between the source access point and the user equipment. After setting up the radio link between the target access point and the user equipment through the instructing unit 140, the source access point may delete the radio link with the user equipment through the deleting unit 150 to complete the handover.

According to the embodiment of the present invention, in the access point network, the source access point determines whether to perform the handover, data obtained by the source access point during the handover is more comprehensive, and the handover process is more reliable. In the embodiment of the present invention, a manner in which the source access point obtains an IP address is adopted, and a problem that the IP address is difficult to be configured manually in the access point network is also solved. In addition, according to the embodiment of the present invention, during the handover procedure, a soft handover manner that the radio link between the target access point and the user equipment is set up before the radio link between the source access point and the user equipment is deleted is adopted, thereby effectively solving a problem of a high call drop rate caused by a hard handover.

FIG. 11 is a schematic structural diagram of another handover apparatus in an access point network according to an embodiment of the present invention. The apparatus includes a determining unit 210, an obtaining unit 220, a setup unit 230, an instructing unit 240, a deleting unit 250, a relocation unit 260, and a tunnel setup unit 270, where the instructing unit 240 and the deleting unit 250 are similar to those in the embodiment corresponding to FIG. 10, which are not repeatedly described here.

The determining unit 210 is configured to determine that a handover is needed according to a measurement report reported by a user equipment, for example, determines whether the handover is needed according to quality of a radio link in an RRC Measurement Report.

The obtaining unit 220 is configured to obtain IP address information of a target access point.

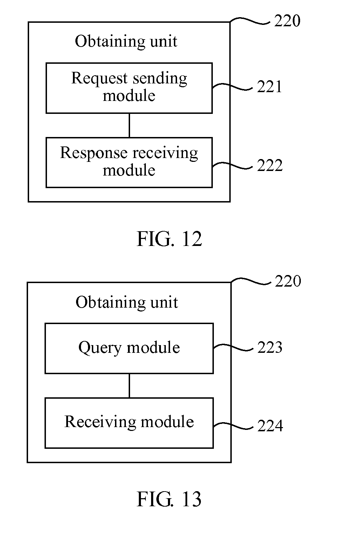

As an embodiment of the present invention, the obtaining unit 220 in the embodiment may include: a request sending module 221 and a response receiving module 222 (see FIG. 12).

The request sending module 221 is configured to send to an access gateway a request message for obtaining an IP address of the target access point, where the request message includes identity information of the target access point. It should be pointed out that, the identity information here may be reported to the access gateway by each access point in advance and stored in the access gateway, and the identity information may uniquely determine one access point. The access gate forwards the request to the target access point according to the identity information of the target access point in the request message. After receiving the request, the target access point feeds back its IP address to the handover apparatus through the access gateway.

The response receiving module 222 is configured to receive a response message which is sent by the target access point and is forwarded through the access gateway. The response message includes the IP address information of the target access point.

In the embodiment, the request sending module 221 may carry IP address information of a source access point in the request message which is sent for obtaining the IP address information. In this way, the target access point may obtain the IP address information of the source access point without sending the request message. Certainly, when the target access point needs to obtain the IP address information of the source access point, the request message for obtaining the IP address information may also be sent to the access gateway in a manner similar to the foregoing manner.

As an embodiment of the present invention, the obtaining unit 220 may be configured to automatically obtain the IP address information reported by the target access point from the access gateway. In this manner, when each access point reports its IP addresses to the access gateway, each access point may also report its identity information to the access gateway.

As an embodiment of the present invention, the obtaining unit 220 may also include a query module 223 and a receiving module 224 (see FIG. 13).

The query module 223 is configured to send an IP address query message to the target access point in a broadcasting packet manner. The IP address query message includes a source IP address of the source access point and identity information of the target access point that needs to be inquired. The identity information may be configured in each access point in advance by a configuration network element at an upper layer.

The receiving module 224 is configured to receive a response message sent by the target access point according to the foregoing IP address query message. The response message includes the IP address information of the target access point. After receiving the IP address query message sent by the source access point, the target access point determines that the source access point needs the IP address of the target access point, and returns the IP address of the target access point to the source access point according to the source IP address of the source access point in the message, so that the receiving module 214 of the source access point may obtain the IP address information of the target access point.

As an embodiment of the present invention, the obtaining unit 220 may also be configured to receive the IP address information of the target access point, where the information is sent by the target access point in the broadcasting packet manner. For example, when the target access point is powered on, it automatically sends its IP address in the broadcasting packet manner. After receiving the IP address, the obtaining unit 220 stores the IP address to be used when subsequently it is instructed to set up a radio link between the target access point and the user equipment. In the embodiment, when the target access point sends the IP address, it may also carry its own identity information at the same time.

The tunnel setup unit 270 is configured to set up an IPsec tunnel with the target access point according to the IP address information of the target access point, where the information is obtained by the obtaining unit 220. At this time, the setup unit 230 is configured to set up, in the IPsec tunnel, an Iur link between the source access point and the target access point. Through the manner of setting up the IPsec tunnel before setting up the Iur link, safety of data transmission in the Iur link may be effectively ensured.

The relocation unit 260 is configured to turn the link between the access gateway and the source access point into the link between the access gateway and the target access point through relocation. During the procedure that the user equipment moves from the source access point to the target access point, through the relocation operation of the relocation unit 260, a network resource may be more effectively used.

According to the embodiment of the present invention, in the access point network, the source access point determines whether to perform the handover, data obtained by the source access point during the handover is more comprehensive, and the handover procedure is more reliable. In the embodiment of the present invention, a manner in which the source access point obtains the IP address is adopted, and a problem that the IP address is difficult to be configured manually in the access point network is also solved. In addition, according to the embodiment, during the handover procedure, a soft handover manner that the radio link between the target access point and the user equipment is set up before the radio link between the source access point and the user equipment is deleted is adopted, thereby effectively solving a problem of a high call drop rate caused by a hard handover. Furthermore, in the embodiment of the present invention, the safety of the data transmission in the Iur link is ensured by setting up the Iur link in the IPsec tunnel.

The related units or modules of the foregoing embodiments may be implemented by hardware or a computer program.

Persons of ordinary skill in the art may understand that all or part of the processes of the methods according to the foregoing embodiments may be implemented by a program instructing relevant hardware. The program may be stored in a computer readable storage medium. When the program is run, the process of each foregoing method according to the embodiments is included. The storage medium may be a magnetic disk, a compact disk, a read-only memory (Read-Only Memory, ROM) or a random access memory (RAM).

The objectives, technical solutions, and beneficial effects of the present invention are described in further detail through the foregoing specific embodiments. It should be understood that the foregoing descriptions are merely specific embodiments of the present invention, but not intended to limit the protection scope of the present invention. Any modification, equivalent replacement, or improvement made without departing from the spirit and principle of the present invention shall fall within the protection scope of the present invention.

## Claims

1. A handover method in an access point network, comprising:
determining, by a source access point, that a handover is needed;
obtaining, by the source access point, IP address information of a target access point;
setting up, by the source access point, an Iur link with the target access point according to the IP address information;
instructing, by the source access point, the target access point to set up a radio link between the target access point and a user equipment; and
deleting, by the source access point, a radio link between the source access point and the user equipment.

2. The handover method according to claim 1, wherein the determining, by the source access point, that the handover is needed, comprises:
determining, by the source access point, that the handover is needed according to a measurement report reported by the user equipment.

3. The handover method according to claim 1, after the deleting, by the source access point, the radio link between the source access point and the user equipment, further comprising:
turning a link between an access gateway and the source access point into a link between the access gateway and the target access point through relocation.

4. The handover method according to claim 1, wherein the obtaining the IP address information of the target access point comprises:
sending, by the source access point to the access gateway, a request message for obtaining an IP address of the target access point, wherein the request message comprises identity information of the target access point; and
receiving, by the source access point, a response message which is sent by the target access point and is forwarded through the access gateway, wherein the response message comprises the IP address information of the target access point.

5. The handover method according to claim 1, wherein the obtaining the IP address information of the target access point comprises:
obtaining, by the source access point from the access gateway, the IP address information reported by the target access point.

6. The handover method according to claim 1, wherein the obtaining the IP address information of the target access point comprises:
sending, by the source access point, an IP address query message to the target access point in a broadcasting packet manner; and
receiving, by the source access point, a response message sent by the target access point according to the IP address query message, wherein the response message comprises the IP address information of the target access point.

7. The handover method according to claim 1, wherein the obtaining the IP address information of the target access point comprises:
receiving, by the source access point, the IP address information of the target access point sent by the target access point in a broadcasting packet manner.

8. The handover method according to claim 1, wherein
a control plane protocol stack of an Iur protocol stack in the Iur link comprises a radio subsystem application part protocol layer (RNSAP), a radio access network application part user adaption protocol layer (RUA), a stream control transmission protocol layer (SCTP), an Internet protocol layer (IP), a data link protocol layer (Data Link), and a physical protocol layer (PHY), wherein the RUA is located between the RNSAP and the SCTP.

9. The handover method according to claim 1, before the setting up, by the source access point, the Iur link with the target access point according to the IP address information, further comprising:
setting up, by the source access point, an IPsec tunnel with the target access point according to the IP address information; and
setting up, by the source access point, the Iur link with the target access point according to the IP address information, specifically comprising:
setting up, by the source access point, the Iur link with the target access point in the IPsec tunnel.

10. A handover apparatus in an access point network, comprising:
a determining unit, configured to determine whether a handover is needed;
an obtaining unit, configured to obtain IP address information of a target access point;
a setup unit, configured to set up an Iur link with the target access point according to the IP address information;
an instructing unit, configured to instruct the target access point to set up a radio link between the target access point and a user equipment; and
a deleting unit, configured to delete a radio link between a source access point and the user equipment.

11. The handover apparatus according to claim 10, wherein
the determining unit is specifically configured to determine that the handover is needed according to a measurement report reported by the user equipment.

12. The handover apparatus according to claim 10, further comprising:
a relocating unit, configured to turn a link between an access gateway and the source access point into a link between the access gateway and the target access point through relocation.

13. The handover apparatus according to claim 10, wherein the obtaining unit comprises:
a request sending module, configured to send to an access gateway a request message for obtaining an IP address of the target access point, wherein the request message comprises identity information of the target access point; and
a response receiving module, configured to receive a response message which is sent by the target access point and is forwarded through the access gateway, wherein the response message comprises the IP address information of the target access point.

14. The handover apparatus according to claim 10, wherein the obtaining unit is specifically configured to obtain the IP address information reported by the target access point from an access gateway.

15. The handover apparatus according to claim 10, wherein the obtaining unit comprises:
a query module, configured to send an IP address query message to the target access point in a broadcasting packet manner; and
a receiving module, configured to receive a response message sent by the target access point according to the IP address query message, wherein the response message comprises the IP address information of the target access point.

16. The handover apparatus according to claim 10, wherein the obtaining unit is specifically configured to receive the IP address information of the target access point, where the information is sent by the target access point in a broadcasting packet manner.

17. The handover apparatus according to claim 10, further comprising:
a tunnel setup unit, configured to set up an IPsec tunnel with the target access point according to the IP address information; wherein
the setup unit is specifically configured to set up an Iur link with the target access point in the IPsec tunnel.
